# EUROPEAN PATENT SPECIFICATION

(11) **EP 4 254 318 B1**
(45) Date of publication and mention of the grant of the patent: **29.04.2026**
(21) Application number: 23164559.9
(22) Date of filing: 28.03.2023
(51) Int. Cl.: G06T 3/40, G06T 5/50

(54) **ADAPTIVE TILE BASED SUPER RESOLUTION**
ADAPTIVE MOSAIKBASIERTE SUPERAUFLÖSUNG
SUPER-RÉSOLUTION ADAPTATIVE À BASE DE PAVÉS

(30) Priority: 30.03.2022 GB 202204587
(43) Date of publication of application: 04.10.2023
(60) Divisional application: 26153772.4
(73) Proprietor: Sony Interactive Entertainment Europe Limited, London W1F 7LP (GB)
(72) Inventor: MOTILLA, Daniel Montero, London, W1F 7LP (GB); BIGOS, Andrew James, London, W1F 7LP (GB)
(74) Representative: D Young & Co LLP

(56) References cited:
- EP-A1- 3 657 431
- JP-A- 2016 540 307
- US-A1- 2018 115 776
- US-A1- 2021 352 307
- US-B1- 10 904 476
- ANONYMOUS: "Tile-based video game - Wikipedia", 11 December 2021 (2021-12-11), XP093267862, Retrieved from the Internet <URL:https://en.wikipedia.org/w/index.php?title=Tile-based_video_game&oldid=1059809510> [retrieved on 20250407]
- LEE ROYSON DSRL2@CAM AC UK ET AL: "Deep Neural Network-based Enhancement for Image and Video Streaming Systems: A Survey and Future Directions", ACM COMPUTING SURVEYS, ACM, NEW YORK, NY, US, US, vol. 54, no. 8, 4 October 2021 (2021-10-04), pages 1 - 30, XP058667016, ISSN: 0360-0300, DOI: 10.1145/3469094
- HONG-HAN SHUAI ET AL: "MobiUP: An Upsampling-Based System Architecture for High-Quality Video Streaming on Mobile Devices", IEEE TRANSACTIONS ON MULTIMEDIA, IEEE, USA, vol. 13, no. 5, 1 October 2011 (2011-10-01), pages 1077 - 1091, XP011386919, ISSN: 1520-9210, DOI: 10.1109/TMM.2011.2156910

## Description

### FIELD

The present disclosure provides a computer-implemented method for video upscaling at a client device. In particular, the present disclosure relates to a method of video upscaling suitable for cloud gaming environments.

### BACKGROUND

In a traditional cloud gaming environment, a server (e.g. a computer running in a data centre) is responsible of executing game logic, rendering a video output and sending the results to the remote client (e.g. a PC application or a consumer video console) as an encoded video stream using a standard video codec such as the popular standard for high definition digital video: H.264 also called Advanced Video Coding. At the other end, the client sends game input controls (for example inputs received from a user of the computing device), receives the video stream coming from the server and decodes each incoming video frame. In order to limit the amount of data required to transmit between server and client, the server can encode the video stream using a lower spatial resolution than the native resolution of the client display device, so an upscaling process needs to be applied in the client side to display the decoded video frames in the native display device resolution. Super resolution techniques reconstruct the lower spatial resolution images sent from the server to a higher-resolution image or sequence.

US 10904476 B1 describes techniques for automated up-sampling of media files. In some examples, a title associated with a media file, a metadata file associated with the title, and the media file may be received. Generating one or more up-sampled scene files may include identifying one or more characters in a frame image of the plurality of frame images, based at least in part on implementation of a facial recognition algorithm including deep learning features in a neural network.

EP 3657431 A1 describes methods, systems, and apparatus, including computer programs encoded on computer storage media, for upscaling an image. One of the methods includes upscaling a low resolution image with a first resolution that depicts particular content to a second resolution greater than the first resolution to create an upscaled image; creating, using the upscaled image, multiple patches of the upscaled image that each include one or more pixels from the upscaled image, each pixel in the upscaled image included in a patch from the multiple patches; assigning each patch in the multiple patches to a bucket from multiple buckets using a value of a property of the respective patch, each of the buckets from the multiple buckets having a different value of the property; determining, for each bucket in the multiple buckets, a filter to apply to each of the patches in the respective bucket to create a corresponding filtered patch; and applying, for each bucket in the multiple buckets, the determined filter to each of the patches in the bucket to create the corresponding filtered patch, a combination of all of the filtered patches representing a higher resolution image of the particular content with a third resolution greater than the first resolution.

US 2018/115776 A1 describes approaches to delivering video in a chroma sampling format with a higher chroma sampling rate (such as a YUV 4:4:4 format) using a video encoder and decoder that operate on video in another chroma sampling format with a lower chroma sampling rate (such as YUV 4:2:0).

### SUMMARY

According to an aspect, there is provided a computer-implemented method according to claim 1. Further features according to embodiments are set out in the dependent claims.

According to a first aspect, there is provided a computer-implemented method for image upscaling at a client device. The method comprising: receiving, from a server device, an image which is one of a plurality of images forming an image stream, wherein the image comprises a plurality of image portions; determining a first group of one or more image portions from the plurality of image portions to apply a first image upscaling process to from a plurality of available image upscaling processes; selecting the first group of image portions based on the determination; and applying the first image upscaling process to the first group of image portions. The upscaling process may be an image upscaling process such as super resolution.

Images received at a client device from a server device, which may be transmitted as encoded lower-resolution images, often require processing such as video upscaling to achieve the intended higher-resolution image suitable for the native resolution of the client display. This can be intensive and require a lot of computing power, particularly when the native client display has a high native resolution, for example a 4K TV which has 8.3 million pixels and a resolution of 3840 x 2160. Selectively applying upscaling to one or more image portions (which form a subset of the total number of image portions of the image) can help to reduce the amount of image processing required to restore images to a resolution suitable for display at the client device. This can improve overall efficiency and save on memory and storage space. Choosing a first upscaling process to apply to a first group of image portions also provides flexibility in being able to apply an upscaling process suitable for that group of image portions. Upscaling processes can include computationally demanding techniques such as one or more super resolution models, or less computationally demanding techniques like bilinear or bicubic interpolation. Some image portions may not need to be upscaled at the client at all. Selecting the most suitable upscaling process for a chosen group of image portions helps to achieve overall efficiency of the video upscaling process whilst maintaining a high-resolution image displayed by the client at the client display.

In some embodiments, the first image upscaling process may comprise a neural network based super resolution model. Neural network based super resolution models may include Super Resolution Generative Adversarial Networks (SRGAN) and Enhanced Super Resolution Generative Adversarial Networks (ESRGAN).

In some embodiments, the method may further comprise receiving, from the server device, metadata relating to processing of the image to be carried out at the client device. For example, the metadata may comprise information relating to a location of the first group of image portions in the image and/or to the first upscaling process to be applied to the first group of image portions. Metadata may be sent from the server to the client alongside the image to provide information to the client on how to perform the upscaling process. This data can be less computationally intensive to send between the server and client devices compared to sending the resolved images.

In some embodiments, the method may comprise determining the one or more image portions to apply the first image upscaling process to based on the metadata.

In some embodiments, the metadata may comprise a tile map comprising a plurality of tiles based on the plurality of image portions, the tile map indicating which image portions to be selected. The tile map may also be referred to as an image portion map.

In some embodiments, the tile map may indicate an index for each of the plurality of tiles (or image portions), wherein the index provides contextual data to the client and/or indicates one of a plurality of upscaling procedures to be applied to a tile based on the first image upscaling process. The index may indicate, for example, whether a tile requires an upscaling process to be applied and, if so, which upscaling process to be applied.

In some embodiments, the metadata can be sent from the server device for each image of the plurality of images which form the image stream. The metadata may be sent alongside the image data or may be sent separately.

In some embodiments, the method may further comprise receiving, from the server device, a manifest file comprising information relating to the interpretation of metadata at the client device.

In some embodiments, the manifest file optionally comprises one or more of:
i) a number of columns in a tile grid;
ii) a number of rows in a tile grid;
iii) a library of the indexes and their related image upscaling processes;
iv) an indication whether the server device supports embedding the tile map for each image in the plurality of images forming the image stream;
v) an indication of availability of an additional stream of data comprising full resolution data; and/or
vi) instructions for compositing the tiles in the tile grid to generate the image.

In some embodiments, determining the first group of image portions may comprise application of a saliency model to detect image portions containing one or more salient regions of the image. A salient region of the image may comprise one or more image portions which have a saliency value above a predetermined threshold. Saliency is a property by which something stands out.

In some embodiments, determining the first group of image portions may comprise detecting one or more edges wherein an edge is a boundary between virtual objects in the image. Optionally, wherein edge detection comprises determining a luminance value of the plurality of image portions. Selecting may comprise selecting one or more image portions having a luminance value above a predetermined threshold.

In some embodiments, determining the first group of image portions can be based on the metadata if metadata has been received from the server device. Determining may be based on application of a saliency model and/or edge detection if metadata has not been received from the server device at the client device. Or, for example, if the metadata does not comprise sufficient information concerning the first group of image portions.

In some embodiments, the method may further comprise applying a local calibration test on the client device to determine a calibration score. The calibration score may be used to determine an upper limit on the number of image portions to which the first image upscaling process can be applied. Optionally, wherein a saliency model is applied if the calibration score is above a predetermined threshold, and an edge detection is applied if the calibration score is below the predetermined threshold.

In some embodiments, the method may further comprise selecting a second group of one or more image portions; and applying a second image upscaling process to the second group of image portions. Optionally, wherein the second image upscaling process is less computationally demanding than the first image upscaling process.

In some embodiments, the method may further comprise storing one or more image portions of the image in a cache. Optionally, storing at least one of the image portions of the first group to which the first image upscaling process has been applied to in the cache. Storing image portions that have has an upscaling applied to them that can be reused saves performing the upscaling again therefore helps to improve efficiency of the process.

In some embodiments, the method may further comprise selecting a third group of one or more image portions to be retrieved from the cache.

In some embodiments, one or more of the image portions are received from the server device. These image portions may not require an upscaling process to be applied. In some examples these may be image portions relating to a graphical user interface (GUI).

In some embodiments, the resolution of the image may be 3840 x 2160 pixels or above. Larger areas require more processing power, particularly when high resolution images are required. The present disclosure provides a method which selectively chooses which tiles benefit from the most processing power, thereby reducing the overall processing required to achieve a high quality image.

In some embodiments, the method may further comprise determining a fourth group of one or more image portions of the image to be used in a subsequent image in the image stream comprising at least the image and the subsequent image. The method comprising: calculating, for each image portion of the plurality of image portions, an average pixel intensity difference between the image and the subsequent image; if the average pixel intensity difference of one or more of the plurality of image portions is below a predetermined threshold, adding the one or more image portions to the fourth group of image portions and storing a location of the fourth group of image portions; and using the fourth group of image portions in the subsequent image.

According to a second aspect, there is provided a client computing device comprising one or more processors that are associated with a memory, the one or more processors configured with executable instructions which, when executed, cause the computing device to carry out the computer-implemented method of the first aspect.

According to a third aspect, there is provided a system comprising; a memory; one or more processors configured to perform the method of the first aspect; a client device according to the second aspect; and a server device.

### BRIEF DESCRIPTION OF DRAWINGS

A more complete understanding of the subject matter may be derived by referring to the detailed description and claims when considered in conjunction with the following figures, wherein like reference numbers refer to similar elements throughout the figures.
Figure 1 illustrates a method of upscaling an image according to an embodiment of the present disclosure;
Figure 2 illustrates a representation of an example tile map according to an embodiment of the present disclosure;
Figure 3 illustrates a flow diagram of a client workflow for video upscaling according to an embodiment of the present disclosure;
Figure 4 illustrates a flow diagram of a cache transfer mechanism according to an embodiment of the present disclosure;
Figure 5 illustrates a flow diagram of a tile selection algorithm based on a saliency model according to an embodiment of the present disclosure;
Figure 6 illustrates a flow diagram of a tile selection algorithm based on edge detection according to an embodiment of the present disclosure;
Figure 7 illustrates a block diagram of one example implementation of a computing device that can be used for implementing the steps indicated in Figure 1 and explained throughout the detailed description;
Figure 8 shows schematically an example of a cloud gaming system that may be used in accordance with the present disclosure.

### DETAILED DESCRIPTION

The following detailed description is merely illustrative in nature and is not intended to limit the embodiments of the subject matter or the application and uses of such embodiments. As used herein, the words "exemplary" and "example" mean "serving as an example, instance, or illustration." Any implementation described herein as exemplary or an example is not necessarily to be construed as preferred or advantageous over other implementations. Furthermore, there is no intention to be bound by any expressed or implied theory presented in the preceding technical field, background, or the following detailed description.

The terms "tile" and "image portion" are used interchangeably throughout the present disclosure.

The present disclosure provides a computer-implemented method for video upscaling in a client-server gaming environment. The method implements an improved efficiency system without sacrificing high quality video upscaling. The system may be particularly useful in a cloud gaming environment. Upscaling can be applied selectively by the client to the areas of the image that are deemed to benefit the most from such models, while applying simpler, less computationally demanding techniques like bilinear or bicubic interpolation for the rest of the image.

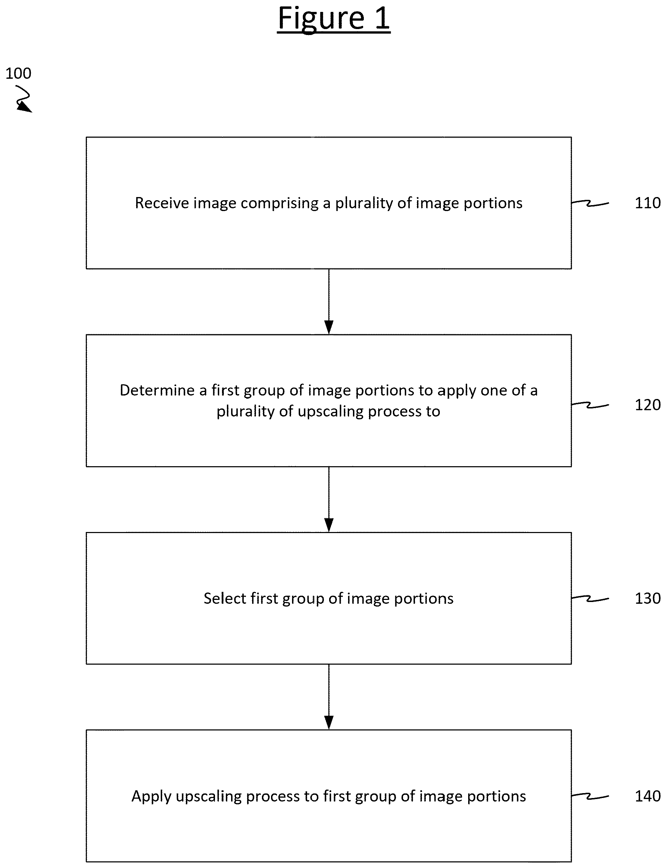

Figure 1 illustrates a method 100 of upscaling an image according to an embodiment of the disclosure.

The method comprises, according to a first step 110, receiving an image comprising a plurality of image portions. The image is received at a client device from a server device. In some examples, the image may be one of a plurality of images which form an image stream such as a video.

The image data received at the client device is divided, or split, into image portions. Image portions may also be referred to herein as tiles. The number of tiles is chosen based on the capabilities of the computer and/or the network to which the computer is connected. For example, the tile size may be 256 x 256 pixels, or 128 x 128 pixels, or any other size deemed suitable. Aspect ratios of the tiles other than 1:1 are possible. Handling and processing of larger tiles requires more powerful processors and more memory. Smaller tiles may lack contextual information required to produce a high-quality filling result. A tile size and shape are therefore chosen according to the hardware constraints.

According to a second step 120, the client device determines a first group of image portions to apply one of a plurality of upscaling processes to. The first group of image portions is a subset of the plurality of image portions that form the image.

Determining the first group of image portions may comprise performing one or more calculations at the client device or may comprise referring to information, such as information provided to the client in a manifest file or in metadata sent to the client device by the server device.

Depending on the capabilities of a server for generating an image for a given game title, the tile selection algorithm which chooses which areas of the image to apply the upscaling process to may be aided by metadata sent by the server to the client. Metadata may be sent on a per-frame basis embedded in the video stream in some examples, for example based on information extracted from a rendering engine (e.g. foreground / background maps in a game rendering engine), saliency detection models and other title-specific global information like biases towards recent regions of the screen. In some embodiments, the client which applies the upscaling process can also perform tile selection logic locally (e.g. at the client) without receiving metadata, for example based on image saliency detection models and/or lightweight image processing heuristics.

The different embodiments concerning determining the first group of image portions are described in more detail below.

A plurality of upscaling processes may be available to the client device. An upscaling process in some embodiments uses super resolution. Super resolution uses machine learning to clarify, sharpen and upscale the image without losing content and characteristics of the image. Super resolution models take as input a low-resolution image (such as an image which has been sent to the client by the server) and produce an upscaled, clear, high-resolution image as the output. Models are trained with the high-resolution as the target and low-resolution images as the input. Upscaling in some examples is based on neural network based super resolution models, e.g. Super Resolution Generative Adversarial Networks (SRGAN) and Enhanced Super Resolution Generative Adversarial Networks (ESRGAN). General Adversarial Networks (GAN) consist of two neural networks, a Generator and a Discriminator network, which work in combination. The Generator, given a set of target samples, produces samples and tries to convince the Discriminator that the samples it produces are real (are the target samples). The Discriminator tries to resolve real (or target) samples from the samples generated by the Generator. This iterative training approach creates a Generator which can produce samples that are similar to the target samples.

Other upscaling techniques that the client device can use to upscale the image, and which are less computationally intensive, include bilinear and bicubic interpolation.

Bilinear interpolation is a method for interpolating functions of two variables (e.g., x and y) using repeated linear interpolation. It is usually applied to functions sampled on a 2D rectilinear grid, though it can be generalised to functions defined on the vertices of (a mesh of) arbitrary convex quadrilaterals. Bilinear interpolation is performed using linear interpolation first in one direction, and then again in the other direction. Although each step is linear in the sampled values and in the position, the interpolation as a whole is not linear but rather quadratic in the sample location. Bilinear interpolation is a resampling technique often used in computer vision and image processing. It is also called bilinear filtering or bilinear texture mapping.

Bicubic interpolation is an extension of cubic interpolation for interpolating data points on a two-dimensional regular grid. The interpolated surface is smoother than corresponding surfaces obtained by bilinear interpolation or nearest-neighbour interpolation. Bicubic interpolation can be accomplished using either Lagrange polynomials, cubic splines, or cubic convolution algorithm. Bicubic interpolation uses the sixteen nearest neighbours (in a 4 x 4 grid) in contrast to bilinear interpolation, which only considers the 4 nearest neighbours.

In some examples, the upscaling process may include not upscaling the image portion. For example, where the lower resolution image sent to the client by the server is sufficient for the final image or where the server directly sends a high-resolution image to the client which does not need any further processing.

In some embodiments, the method may comprise determining one or more further subsets of tiles in addition to the first group to apply a different upscaling process to which is different to the first upscaling process. For example, one or more different super resolution models may be applied to different areas of the image, or some areas of the image may have less computationally intensive upscaling processes applied to them compared to other areas of the image. In some examples, the image portions, or tiles, may be allocated an index depending on the upscaling process determined for that particular image portion. This allows the client to determine which upscaling processes to apply to which image portions.

Flexibility is provided by choosing from one of a plurality of available upscaling processes. Different super resolution models may be available, for example, for more visually complex tiles, a full capacity (slow) super resolution model could be used. For more visually simple tiles, however, smaller (fast) super resolution models could be used. In other examples bicubic or bilinear interpolation may also be used.

Different super resolution models also can be trained to focus on specific types of visual content. For example, super resolution models can be designed to focus specifically on different types of visual areas of an image such as water and vegetation, or more generic models. These models can be mapped onto the current image being processed at the client device, for example based on information received via metadata from the server.

The server can send information to the client along with the image. Depending on the capabilities exposed by the server for a given game title, a tile selection algorithm which indicates which image portions to apply which upscaling processes to can be aided by metadata sent by the server to the client on a per-frame basis embedded in the video stream. Embedded information can be based on information extracted from the game rendering engine (e.g. foreground / background maps), saliency detection models and other title-specific global information like biases towards recent regions of the screen. As an alternative mechanism, the client will also be able to perform the tile selection logic locally based for example on image saliency detection models and lightweight image processing heuristics described herein.

According to a third step 130, the method comprises selecting the first group of image portions. The image portions selected is based on the determination made in step 120.

According to a fourth step 140, the method comprises applying the chosen upscaling process to the selected image portions.

The third and fourth steps 130, 140 are repeated as appropriate to select and apply one or more further upscaling processes which may be different to the first upscaling process to one or more determined subsets of image portions which may be different to the first group of image portions.

The client device may keep a cache of upscaled image contents (e.g. a selection of image portions) from a previous image (e.g. video frame) in some embodiments so that already upscaled images can be reused in one or more next images of the image stream. Reusing images, for example if not many changes happen between two consecutive frames of the image steam, helps to reduce processing and improve efficiency of the method.

The system described in the present disclosure is suitable for a range of streaming architectures. For example: cloud native games (e.g. including metaverse applications) that can provide accurate contextual information to a client device and improve super resolution performance; to cloud enhanced games, that can provide some hints to the streaming system with a low impact to the game itself (for example via an API); and with unmodified games via server and client side analysis of the streamed content.

### Server assisted metadata

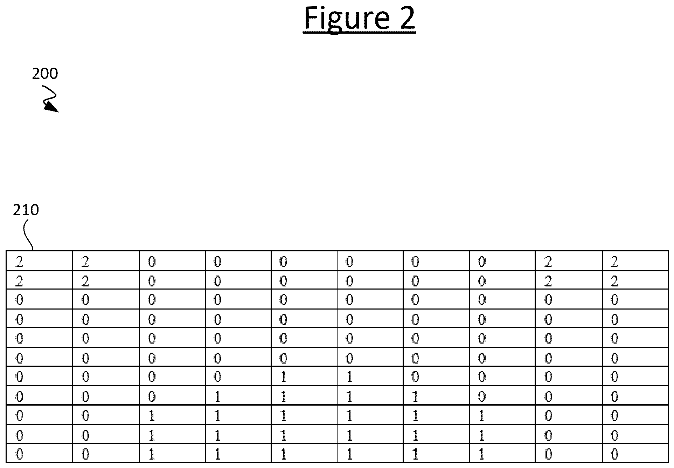

Figure 2 illustrates a representation of an example tile map 200 according to an embodiment of the present disclosure. The example tile map 200 is provided as an illustrative example only. As will be appreciated, many other configurations and alternatives are possible.

The tile map 200 provides a grid comprising tiles 210 (or image portions) which the total image is divided into. Each tile 210 of the tile map 200 is provided with an index. The index indicates a process (or lack of process) to be applied to that tile at the client device. In the illustrative example of Figure 2, each tile is provided with an index of 0, 1 or 2.

Tiles 210 having the same index may be grouped, such as at the top corners of the example in Figure 2 comprising 4 adjacent tiles 210 having an index of 2. This is due to the image to be upscaled, and for example may correspond to areas of the image having a similar texture.

In some embodiments, for every video frame (e.g. image) that is transmitted, the server can embed a compressed video upscaling tile map 200. The tile map 200 signals to the client if video upscaling, such as super resolution, should be skipped for a given tile (e.g. index value = 0). Index values other than 0 can represent an index to an upscaling process that may have been provided to the client in a manifest file, for example as one of a selection of upscaling processes. The client can then use the specific upscaling processes indicated by the index in the tile map 200. In some examples, the indices may list different super resolution models for specific areas of the image, for example depending on the image contents. In other examples, the indices may indicate areas to which more and/or less intensive upscaling can be applied.

In one example, for a single frame the client can use a dedicated super resolution model for different image portions/tiles 210. For example, one super resolution model could be used for user interface areas (e.g. index value = 1), another one (e.g. index value = 2) could be trained on grass textures, and a further one (e.g. index value = 3) could be indicated for other types of contents.

Depending on the degree of integration with the game rendering engine, the server can generate tile maps 200 leveraging different types of information. For example, information sent to the client can include:
- Game engine metadata concerning areas of the image such as:
   - Foreground / background elements
   - Regions of interest (e.g. a car in a racing game)
   - User interface elements
- Saliency detection models, as described in the "Tile selection algorithm based on saliency model" section below.
- Edge detection models, as described in the "Tile selection algorithm based on edge detection" section below.

The tile index IDs can be represented as bit flags to allow the server to provide more contextual information to the client. For example, a tile 210 could be flagged as GUI/User interface. In some examples, a flag may indicate that the server has rendered and sent resolved images directly to the client for these types of images. This information may be provided to the client in the manifest file, for example as described above. In other examples, this information may be comprised in game title.

In some embodiments a tag, which may be additional to the index, is available to indicate that full resolution data is already available at the client, see Full Resolution Tile Data below. For example, the client may have already applied upscaling to and stored some tiles 210 of the plurality of tiles.

### Image upscaling client calibration

In one embodiment, in order to determine the capabilities of the client hardware for applying image upscaling, such as super resolution models, the client can perform a local calibration test. A local calibration test can be applied for example when the upscaling feature is enabled at the client.

The calibration test returns as the result a "calibration score" which indicates the capabilities of the client to perform upscaling. In some examples, the score may relate specifically to super resolution capabilities of the client. This calibration score can be used by the client and the server to decide the percentage of tiles to apply upscaling to (or in some examples to apply super resolution to) for each image of the image stream. In one example, a maximum of 50% of tiles 210 per image may be determined. It will be appreciated that any percentage can be determined as a result of the calibration score.

### Image upscaling resolution manifest

In some embodiments, for example when a user selects a particular game title to play e.g. in a cloud environment, the client can download or be provided with a corresponding upscaling (e.g. super resolution) manifest file. The manifest file preferably contains the relevant data required by the client to perform image upscaling for the incoming images or video frames of that specific game title sent to it by the server.

The manifest file sent to the client from the server may include information such as:
- Number of columns in a tile grid
- Number of rows in the tile grid
- List of super resolution model URLs to be downloaded by the client - an index represents an index present in a tile map 200 that can be supplied by the server, (see Server assisted metadata above)
- 'Tile map enabled' Boolean flag indicating if the server supports embedding a resolution tile map 200 for each frame (image) in the video stream
- A Boolean flag 'full resolution data enabled' indicating the presence of an additional stream that contains full resolution data
- 'Full resolution blend mode' describing how full resolution tiles are composited with the generated tiles 210 (e.g., replace, blend etc.) to complete the final image.

For example:
title: game001
n_cols: 20
n_rows: 20
sr_models:
   - Index 1 - https://sr-model-repository/game001_001.onnx
   - Index 2 - https://sr-model-repository/game001_002.onnx
tile_map_enabled: true
full_resolution_data_enabled: false
full_resolution_blend_mode: 1

In some examples, when tile mapping is enabled, the dimension of the tile set can be transmitted along with the map itself. This allows the server to optimize the handling based on the game content dynamically.

### Full Resolution Frame Data

For some content, super resolution can struggle to provide good quality results. In other examples, the cost of performing super resolution at the client is more computationally expensive than rendering at the server and transmitting full resolution data to the client.

This case is supported by allowing the server in some embodiments to supply either tiles indicating an index representing an upscaling application or image portions at full resolution. A primary use case for this embodiment is the generation of a high-quality GUI. The server can render the GUI at full resolution, and this can then be combined with the output of further processing (on areas of the image which are not part of the GUI) performed at the client to complete the image.

### Client upscaling workflow

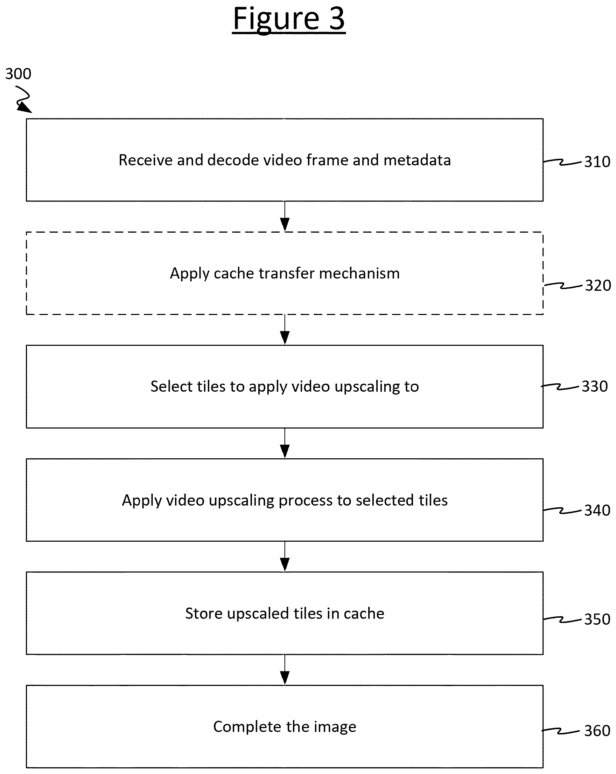

Figure 3 illustrates a flow diagram of a client workflow for video upscaling according to an embodiment of the present disclosure.

At step 310, the client receives and decodes a new video frame coming from the server. The client also receives and decodes the corresponding embedded metadata if the server provided it.

Optionally, at step 320, the client can apply a cache transfer mechanism described in the "cache transfer mechanism" section below which reuses a number of image portions that have already been upscaled and stored locally at the client and which do not change much between frames.

At step 330, the client determines and selects the tiles for which an upscaling process, e.g. a super resolution model, will be applied. In some cases, the server may send a tile map 200 embedded in metadata for interpreting tile upscaling, whilst in other cases the server may not send a tile map 200.

The determination and selection may comprise selecting a first group of tiles (image portions). In further examples, the determination and selection may comprise selecting a further one or more groups of tiles (image portions).

If the server provided a tile map 200, the client selects tiles 210 where the corresponding index value is different than 0 (i.e. in this example a non-zero index value indicates that an upscaling process of some kind is to be applied).

However, if the server did not provide a tile map 200 to the client, the client can instead perform local tile selection and determination concerning which upscaling process to be applied.

In one example, when the client performs local tile selection, the client performs a calibration score as described above. If the client calibration score is above a predefined threshold, the client can apply a "Tile selection algorithm based on saliency model" method as described below. If the client calibration score is below the predefined threshold, the client can apply the "Tile selection algorithm based on edge detection" method described as described below. The calibration score determines if the client hardware is powerful enough to apply a saliency model in real time so that score could be the saliency model frames-per-second throughput, and the threshold could be, for example, 120 frames per second.

At step 340, the client performs upscaling, such as super resolution, to the subset of tiles selected in step 330. In some examples this can include applying several different upscaling processes to different groups of image portions (tiles) 210 of the image.

If the server provided a tile map 200, the method further comprises selecting for each tile 210 the corresponding upscaling process, e.g. super resolution model, using the index value provided in the tile map 200 to refer to a list of available upscaling processes provided in a manifest file sent to the client from the server.

If the server did not provide a tile map 200 to the client, the client can use a unique model provided in the title manifest file. For example, if the server does not send a tile map per frame, it can still signal in an initial manifest file a generic fallback resolution model for the client to apply for a particular game title.

In step 350, tiles generated in step 340 can be optionally stored at the client, for example in a tile cache. Previously generated tiles from previous frames may also be stored in the cache.

At step 360, the client generates a complete image comprising the plurality of tiles 210. The client can combine the upscaled tiles generated in step 340 with tiles stored at the cache (as known from the result of step 320) to complete the image. This may comprise compositing the newly upscaled tiles with those stored in the cache and/or other tiles which may not have had an upscaling process applied to them by the client (see "Full resolution frame data above").

### Cache transfer mechanism

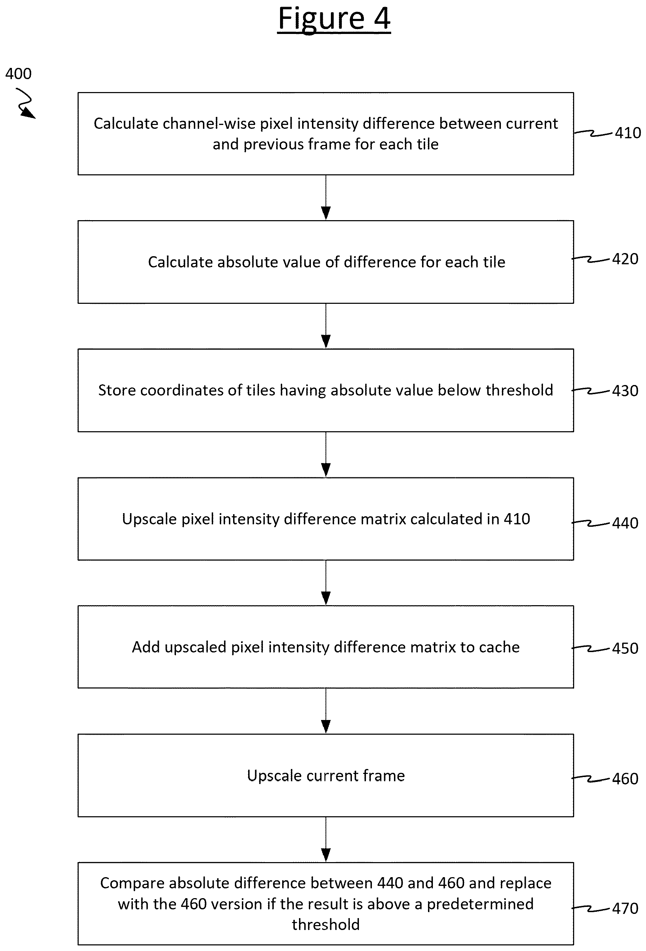

Figure 4 illustrates a flow diagram of a cache transfer mechanism according to an embodiment of the present disclosure. The client can reuse a subset of one or more stored tiles 210 calculated on a previous frame, for example, so that it doesn't need to perform upscaling again to areas where there is not much change in the image. For that, a transformation process can be performed based on the low-resolution frame changes.

In a first step 410, a channel-wise average pixel intensity (e.g. brightness) difference between a current frame and a previous frame is calculated. The difference is calculated for the three reg (R), green (G) and blue (B) (RGB) channels of both the current frame and the previous frame. The result of the calculation is a three-channel difference matrix which indicates a magnitude of the pixel intensity difference for each tile 210 of the tile map 200. This can be a helpful indicator in determining which tiles have the greatest change from frame to frame, and therefore which may be suitable for applying upscaling procedures to.

In a second step 420, the method comprises calculating the average of the absolute value of the three-channel difference matrix calculated in step 410 for each of the individual tiles 210. The three-channels are averaged into a single channel, and then the average of the pixels in the tile is calculated to determine a per-tile average score. Calculating the absolute value indicates the amount of change of intensity between frames, it is not necessary to know whether the pixel has a value of intensity which is lower or higher, rather the magnitude of the change. This determines how different tiles are from the previous frame to the current frame.

For each tile 210, if the value calculated in step 420 is below a predefined threshold, the method comprises storing the coordinates of the tile in a list of tiles for which it won't be necessary to perform upscaling to for the current frame. Tiles which are below the predefined threshold may be stored in a cache, since the low score indicates that the change between frames is small (or minimal compared to other tiles) and so can be reused. The cache is local to the client device.

At step 440, the difference matrix calculated in step 410 is upscaled. Preferably the upscaling process used to upscale the difference matrix is bicubic interpolation.

In step 450, the upscaled difference matrix calculated in 440 is added to the tiles stored in the cache.

At step 460, the original current frame is upscaled. Preferably, using bicubic interpolation.

At step 470, for each pixel in the transformed image calculated in step 450, if the absolute pixel difference between the transformed image of step 440 and the bicubic version calculated in step 460 is above a predefined threshold, replace the pixel with the bicubic version calculated in 460. The predetermined threshold may be empirically determined. For example, a pixel difference threshold of 10 may give a good result.

In some cases, step 450 can generate ghosting image artifacts. Step 470 is an error-correction step to mitigate these artifacts. Step 470 determines if the pixels generated from 450 are candidates for producing artifacts in the image due to large differences between the current and previous framens and if that is the case, use the pixels from 460.

### Tile selection algorithm based on saliency model

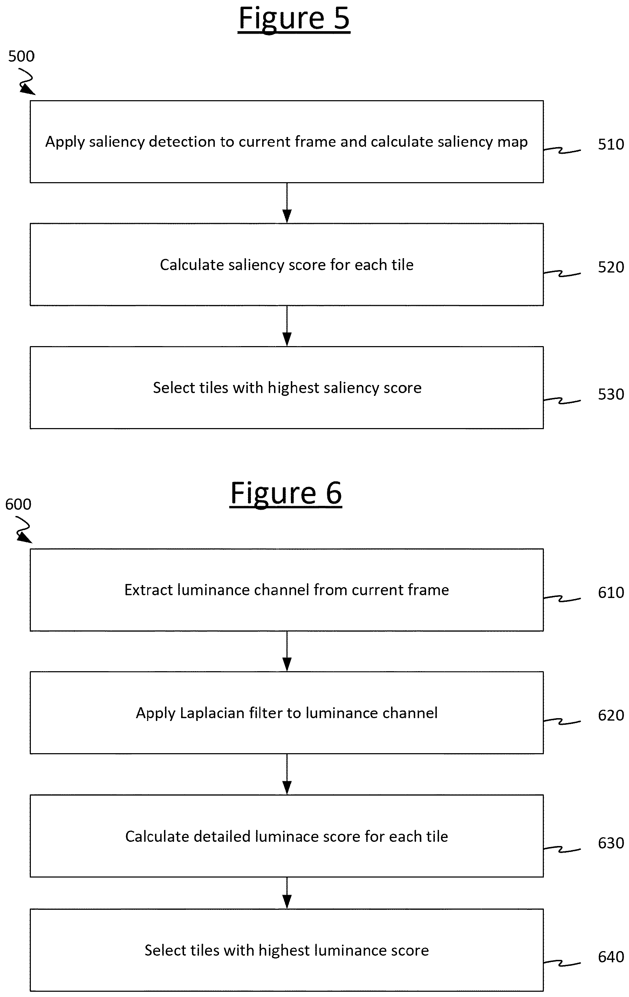

Figure 5 illustrates a flow diagram of a tile selection algorithm based on a saliency model according to an embodiment of the present disclosure. The following steps can be taken to select tiles using a saliency model. Firstly, according to step 510, apply a saliency detection model to the current frame to calculate a saliency map. Saliency detection models may include: Switched Reluctance Motor (SRM) or Pixel-wise Contextual Attenuation Network (PiCANet). Saliency detection models aim to model human visual attention to detect distinct regions or objects on which people will likely focus their eyes on in visual scenes. Contextual information is an important feature of saliency detection.

Secondly, at step 520, for each tile calculate a saliency score as the average of the saliency values obtained in the first step.

Thirdly, select the tiles with the highest saliency score as candidates for performing upscaling to (e.g. super resolution), unless the tiles are in the list of tiles for which it is not necessary to perform super resolution, as generated for example by the aforementioned cache transfer mechanism.

A salient region of the image may comprise one or more image portions which have a saliency value above a predetermined threshold. This threshold can be calculated dynamically. The saliency model described above will emit one saliency value per pixel, so the pixel saliency values of each pixel is averaged inside a tile to get per-tile saliency values. After that, a determination can be made as to whether to apply super-resolution to the tiles with a predetermined saliency value e.g. above the 75-percentile of all the tile saliency values in the image (or in other words, choose the top 25% tiles with the highest saliency value).

### Tile selection algorithm based on edge detection

Figure 6 illustrates a flow diagram of a tile selection algorithm based on edge detection according to an embodiment of the present disclosure. The following steps can be taken to select tiles using an edge detection method. This method may be used by the client if no tile map 200 is provided by the server.

According to a first step 610, extract a luminance channel from the current frame (image). Luminance is a photometric measure of luminous intensity per area unit of light travelling in a given direction. A luminance channel contains information about dynamic range. It may also be referred to as an achromatic channel.

Secondly, apply a Laplacian filter to the luminance channel extracted in the first step. A Laplacian filter can help to identify sudden transitions in the image. For example, Laplacian filters can be particularly advantageous for highlighting edges of the image.

Thirdly, the absolute value of the matrix generated in the second step can be calculated.

For each tile, then calculate a detail score as the average of the values obtained in the third step. For each tile, the absolute values of the luminance values of the pixels that make up the tile are calculated. Each tile has a "detail score" which is an average of the pixels of that tile.

Finally, select the tiles with the highest detail score as candidates for performing upscaling to (e.g. super resolution), unless they are in a list of tiles for which it is not necessary to perform super resolution on (e.g. index value = 0, or tile already upscaled and stored in cache).

In some examples, selecting may comprise selecting one or more image portions having a luminance value above a predetermined threshold. As with the saliency example above, the predetermined threshold can be dynamically determined so that e.g. the top 25% of tiles with the most edges can be selected.

### Client side tile map refinement

The client can apply additional processing to a set of tiles received from the client based on its local knowledge. For example, if the client has information about a gaze direction of the player (available for VR/AR games) it can apply foveation to the tile map 200 to reduce the number of tiles that need full upscaling to those the player is currently looking at as determined by the gaze direction. This level of refinement can be applied by the client (and not the server) since the user's gaze might have changed if the frame was rendered by the server.

Depending on its capabilities the client device can perform additional optimizations during tile processing. For example, connected tiles can be merged into a single larger tile for processing if this is more efficient. The client can perform an initial calibration process to find the best tile sizes (using the per-tile overhead and the cost of the resolution processing).

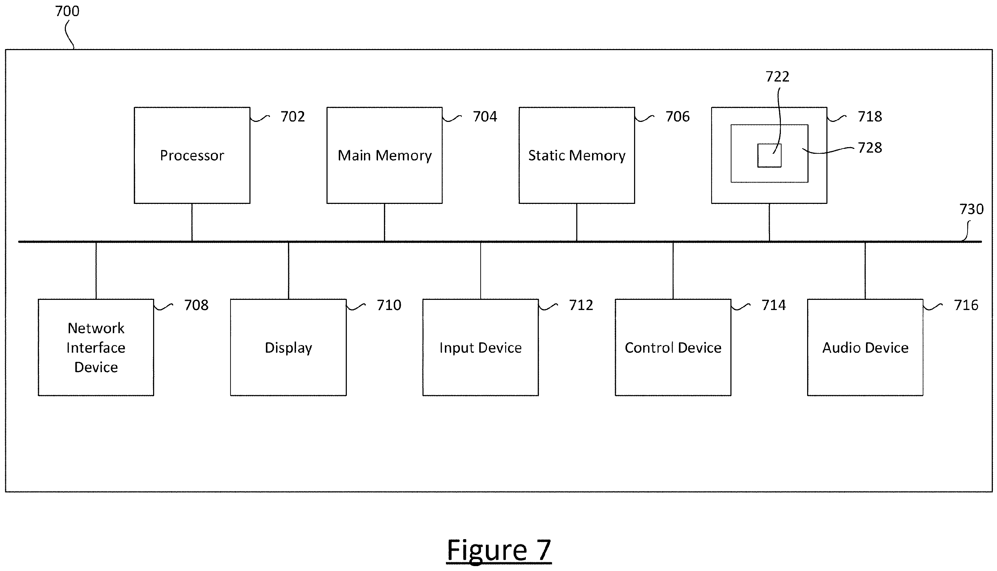

Figure 7 illustrates a block diagram of one example implementation of a computing device 700 that can be used for implementing the steps indicated in Figure 1 and explained throughout the detailed description. The computing device is associated with executable instructions for causing the computing device to perform any one or more of the methodologies discussed herein. The computing device 700 may operate in the capacity of the data model or one or more computing resources for implementing the data model for carrying out the methods of the present disclosure. In alternative implementations, the computing device 700 may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 700 includes a processing device 702, a main memory 704 (e.g., read-only memory (ROM), flash memory, dynamic random-access memory (DRAM) such as synchronous DRAM (SDRAM) or Rambus DRAM (RDRAM), etc.), a static memory 706 (e.g., flash memory, static random-access memory (SRAM), etc.), and a secondary memory (e.g., a data storage device 718), which communicate with each other via a bus 730.

Processing device 702 represents one or more general-purpose processors such as a microprocessor, central processing unit, or the like. More particularly, the processing device 702 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 702 may also be one or more special-purpose processing devices such as an application specific integrated circuit (ASIC), a field programmable gate array (FPGA), a digital signal processor (DSP), network processor, or the like. Processing device 702 is configured to execute the processing logic (instructions 722) for performing the operations and steps discussed herein.

The computing device 700 may further include a network interface device 708. The computing device 700 also may include a video display unit 710 (e.g., a liquid crystal display (LCD) or a cathode ray tube (CRT)), an alphanumeric input device 712 (e.g., a keyboard or touchscreen), a cursor control device 714 (e.g., a mouse or touchscreen), and an audio device 716 (e.g., a speaker).

The data storage device 718 may include one or more machine-readable storage media (or more specifically one or more non-transitory computer-readable storage media) 728 on which is stored one or more sets of instructions 722 embodying any one or more of the methodologies or functions described herein. The instructions 722 may also reside, completely or at least partially, within the main memory 704 and/or within the processing device 702 during execution thereof by the computer system 700, the main memory 704 and the processing device 702 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid-state memory, magnetic tape, a removable computer diskette, a random-access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

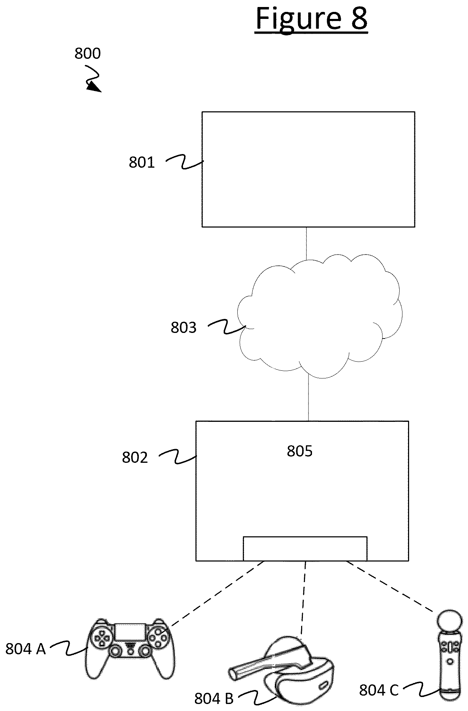

Figure 8 shows schematically an example of a cloud gaming system 800 that may be used in accordance with the present disclosure. In Figure 8, the cloud gaming system 800 is shown as comprising a server 801 that is in communication with a client device 802 via a communications network 803. The server 801 may be configured to perform at least some of the rendering described above.

The client device 802 may include, e.g. a video game playing device (games console), a smart TV, a set-top box, a smartphone, laptop, personal computer (PC), USB-streaming device (e.g. Chromecast), etc. The client device 802 may receive e.g. video frames from the server 801, via the communications network 803. In some examples, the client device 801 may receive image data from the server 801 and perform further processing on that image data. The image data may include metadata and/or a manifest file as described above.

In Figure 8, the client device 802 is shown as being associated with a plurality of input devices 804A (DualShock 4 ^{®}), 804B (PS VR^{®} headset), 804C (PS Move^{®} Controller). It will be appreciated that the input devices 804A, 804B, 804C shown are merely illustrative examples and that a different number of, and / or different types of input devices may be provided. The input devices are in communication with the client device via a wired or wireless connection.

In Figure 8, the client device 802 is shown as comprising a communication interface 805 for receiving user inputs generated at or via the input devices. It will be further appreciated that in some examples, user inputs may be generated at the client device 802 and not necessarily with a separate, standalone input device. For example, if the client device 802 is e.g. a smartphone or table with a touchscreen.

Unless specifically stated otherwise, as apparent from the following discussion, it is appreciated that throughout the description, discussions utilising terms such as "providing", "calculating", "computing," "identifying", "detecting ", "establishing" , "training", "determining", "storing", "generating" ,"checking", "obtaining" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. Many other implementations will be apparent to those of skill in the art upon reading and understanding the above description. Although the disclosure has been described with reference to specific example implementations, it will be recognised that the disclosure is not limited to the implementations described but can be practiced with modification and alteration within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The disclosure may be implemented by means of hardware comprising several distinct elements, and by means of a suitably programmed computer. The mere fact that certain measures are recited in mutually different dependent claims does not indicate that a combination of these measures cannot be used to advantage.

## Claims

1. A computer-implemented method (100) for image upscaling at a client device, the method comprising:
receiving, from a server device, an image which is one of a plurality of images forming an image stream, wherein the image comprises a plurality of image portions (110);
receiving, from the server device, metadata relating to processing of the image to be carried out at the client device;
determining a first group of one or more image portions from the plurality of image portions to apply a first image upscaling process to from a plurality of available image upscaling processes (120) , wherein determining the first group of image portions to apply the first image upscaling process to is based on the metadata;
selecting the first group of image portions based on the determination (130);
applying the first image upscaling process to the first group of image portions (140); and
wherein the metadata comprises a tile map (200) comprising a plurality of tiles (210) based on the plurality of image portions, the tile map indicating which image portions to be selected, and wherein the tile map indicates an index for each of the plurality of tiles, wherein the index indicates an intensity of upscaling to be applied or one of a plurality of upscaling procedures to be applied to a tile based on the first image upscaling process.

2. The computer-implemented method of claim 1, wherein the first image upscaling process comprises a neural network based super resolution model.

3. The computer-implemented method of any preceding claim, wherein the tile map indicates an index for each of the plurality of tiles, wherein the index provides contextual data to the client and/or indicates one of a plurality of upscaling procedures to be applied to a tile based on the first image upscaling process.

4. The computer-implemented method of any preceding claim, wherein the metadata is sent from the server device for each image of the plurality of images which form the image stream.

5. The computer-implemented method of any preceding claim, further comprising receiving, from the server device, a manifest file comprising information relating to the interpretation of metadata at the client device, wherein the manifest file comprises one or more of:
i) a number of columns in a tile grid;
ii) a number of rows in a tile grid;
iii) a library of the indexes and their related image upscaling processes;
iv) an indication whether the server device supports embedding the tile map for each image in the plurality of images forming the image stream;
v) an indication of availability of an additional stream of data comprising full resolution data; and/or
vi) instructions for compositing the tiles in the tile grid to generate the image.

6. The computer-implemented method of any preceding claim, wherein determining the first group of image portions comprises application of a saliency model (500) to detect image portions containing one or more salient regions of the image, wherein a salient region of the image comprises one or more image portions which have a saliency value above a predetermined threshold.

7. The computer-implemented method of any of claims 1 to 5,wherein determining the first group of image portions comprises detecting one or more edges wherein an edge is a boundary between virtual objects in the image, wherein edge detection comprises extracting a luminance channel (610), applying a Laplacian filter to the luminance channel (620), calculating a detailed luminance score for each tile (630) thereby determining a luminance value of the plurality of image portions, and selecting comprises selecting one or more image portions having a luminance value above a predetermined threshold.

8. The computer-implemented method of any preceding claim, further comprising selecting a second group of the one or more image portions; and
applying a second image upscaling process to the second group of image portions, wherein the second image upscaling process is less computationally demanding than the first image upscaling process.

9. The computer-implemented method of any preceding claim, further comprising storing one or more image portions of the image in a cache and selecting a third group of one or more image portions to be retrieved from the cache.

10. The method of any preceding claim wherein the resolution of the image is 3840 x 2160 pixels or above.

11. The computer-implemented method of any preceding claim, further comprising: determining a fourth group of one or more image portions of the image to be used in a subsequent image in the image stream comprising at least the image and the subsequent image, the method comprising:
calculating, for each image portion of the plurality of image portions, an average pixel intensity difference between the image and the subsequent image;
if the average pixel intensity difference of one or more of the plurality of image portions is below a predetermined threshold, adding the one or more image portions to the fourth group of image portions and storing a location of the fourth group of image portions; and
using the fourth group of image portions in the subsequent image.

12. A client computing device (700) comprising one or more processors (702) that are associated with a memory (704), the one or more processors configured with executable instructions which, when executed, cause the computing device to carry out the computer-implemented method of any preceding claim.

13. A system comprising;
a memory;
a client device according to claim 12; and
a server device.

## Patentansprüche

1. Computerimplementiertes Verfahren (100) zum Hochskalieren eines Bildes an einer Client-Vorrichtung, das Verfahren umfassend:
Empfangen, von einer Server-Vorrichtung, eines Bildes, das eines aus einer Vielzahl von Bildern ist, die einen Bildstrom bilden, wobei das Bild eine Vielzahl von Bildabschnitten (110) umfasst;
Empfangen von Metadaten bezüglich des Verarbeitens des Bildes, die an der Client-Vorrichtung durchgeführt werden soll, von der Server-Vorrichtung;
Bestimmen einer ersten Gruppe von einem oder mehreren Bildabschnitten aus der Vielzahl von Bildabschnitten, auf die ein erster Bildhochskalierungsprozess aus einer Vielzahl von verfügbaren Bildhochskalierungsprozessen (120) angewendet werden soll, wobei das Bestimmen der ersten Gruppe von Bildabschnitten, auf die der erste Bildhochskalierungsprozess angewendet werden soll, auf den Metadaten basiert;
Auswählen der ersten Gruppe von Bildabschnitten basierend auf der Bestimmung (130);
Anwenden des ersten Bildhochskalierungsprozesses auf die erste Gruppe von Bildabschnitten (140);
und
wobei die Metadaten eine Kachelkarte (200) umfassen, die eine Vielzahl von Kacheln (210) basierend auf der Vielzahl von Bildabschnitten umfasst, wobei die Kachelkarte angibt, welche Bildabschnitte ausgewählt werden sollen, und wobei die Kachelkarte einen Index für jede der Vielzahl von Kacheln angibt, wobei der Index eine Intensität der anzuwendenden Hochskalierung oder einen aus einer Vielzahl von Hochskalierungsprozeduren angibt, die auf eine Kachel basierend auf dem ersten Bildhochskalierungsprozess angewendet werden sollen.

2. Computerimplementiertes Verfahren nach Anspruch 1, wobei der erste Bildhochskalierungsprozess ein auf einem neuronalen Netz basierendes Super-Resolution-Modell umfasst.

3. Computerimplementiertes Verfahren nach einem der vorstehenden Ansprüche, wobei die Kachelkarte einen Index für jede der Vielzahl von Kacheln angibt, wobei der Index kontextuelle Daten für den Client bereitstellt und/oder einen aus einer Vielzahl von Hochskalierungsprozeduren angibt, der auf eine Kachel basierend auf dem ersten Bildhochskalierungsprozess angewendet werden soll.

4. Computerimplementiertes Verfahren nach einem der vorstehenden Ansprüche, wobei die Metadaten von der Server-Vorrichtung für jedes Bild aus der Vielzahl von Bildern, die den Bildstrom bilden, gesendet werden.

5. Computerimplementiertes Verfahren nach einem der vorstehenden Ansprüche, ferner umfassend das Empfangen einer Manifestdatei von der Server-Vorrichtung, umfassend Informationen bezüglich der Interpretation von Metadaten an der Client-Vorrichtung, wobei die Manifestdatei eines oder mehrere der Folgenden umfasst:
i) eine Anzahl von Spalten in einem Kachelraster;
ii) eine Anzahl von Zeilen in einem Kachelraster;
iii) eine Bibliothek der Indizes und ihrer zugehörigen Bildhochskalierungsprozesse;
iv) eine Angabe, ob die Server-Vorrichtung das Einbetten der Kachelkarte für jedes Bild aus der Vielzahl von Bildern, die den Bildstrom bilden, unterstützt;
v) eine Angabe der Verfügbarkeit eines zusätzlichen Datenstroms, umfassend Daten in voller Auflösung; und/oder
vi) Anweisungen zum Zusammensetzen der Kacheln in dem Kachelraster, um das Bild zu erzeugen.

6. Computerimplementiertes Verfahren nach einem der vorstehenden Ansprüche, wobei das Bestimmen der ersten Gruppe von Bildabschnitten das Anwenden eines Salienzmodells (500) umfasst, um Bildabschnitte zu erkennen, die eine oder mehrere saliente Bereiche des Bildes enthalten, wobei ein salienter Bereich des Bildes einen oder mehrere Bildabschnitte umfasst, die einen Salienzwert oberhalb eines vorbestimmten Schwellenwertes aufweisen.

7. Computerimplementiertes Verfahren nach einem der Ansprüche 1 bis 5, wobei das Bestimmen der ersten Gruppe von Bildabschnitten das Erkennen einer oder mehrerer Kanten umfasst, wobei eine Kante eine Grenze zwischen virtuellen Objekten in dem Bild ist, wobei die Kantenerkennung das Extrahieren eines Luminanzkanals (610), das Anwenden eines Laplace-Filters auf den Luminanzkanal (620), das Berechnen eines detaillierten Luminanz-Scores für jede Kachel (630) umfasst, wodurch ein Luminanzwert der Vielzahl von Bildabschnitten bestimmt wird, und das Auswählen das Auswählen eines oder mehrerer Bildabschnitte umfasst, die einen Luminanzwert oberhalb eines vorbestimmten Schwellenwertes aufweisen.

8. Computerimplementiertes Verfahren nach einem der vorstehenden Ansprüche, ferner umfassend das Auswählen einer zweiten Gruppe des einen oder der mehreren Bildabschnitte; und
Anwenden eines zweiten Bildhochskalierungsprozesses auf die zweite Gruppe von Bildabschnitten, wobei der zweite Bildhochskalierungsprozess weniger rechenintensiv ist als der erste Bildhochskalierungsprozess.

9. Computerimplementiertes Verfahren nach einem der vorstehenden Ansprüche, ferner umfassend das Speichern eines oder mehrerer Bildabschnitte des Bildes in einem Cache und das Auswählen einer dritten Gruppe von einem oder mehreren Bildabschnitten, die aus dem Cache abgerufen werden sollen.

10. Verfahren nach einem der vorstehenden Ansprüche, wobei die Auflösung des Bildes 3840 x 2160 Pixel oder darüber beträgt.

11. Computerimplementiertes Verfahren nach einem der vorstehenden Ansprüche, ferner umfassend: Bestimmen einer vierten Gruppe von einem oder mehreren Bildabschnitten des Bildes, die in einem nachfolgenden Bild in dem Bildstrom verwendet werden sollen, umfassend mindestens das Bild und das nachfolgende Bild, wobei das Verfahren umfasst:
Berechnen einer durchschnittlichen Pixelintensitätsdifferenz zwischen dem Bild und dem nachfolgenden Bild für jeden Bildabschnitt aus der Vielzahl von Bildabschnitten;
falls die durchschnittliche Pixelintensitätsdifferenz eines oder mehrerer aus der Vielzahl von Bildabschnitten unterhalb eines vorbestimmten Schwellenwertes liegt, Hinzufügen des einen oder der mehreren Bildabschnitte zu der vierten Gruppe von Bildabschnitten und Speichern einer Position der vierten Gruppe von Bildabschnitten; und
Verwenden der vierten Gruppe von Bildabschnitten in dem nachfolgenden Bild.

12. Client-Rechenvorrichtung (700), umfassend einen oder mehrere Prozessoren (702), die einem Speicher (704) zugeordnet sind, wobei der eine oder die mehreren Prozessoren mit ausführbaren Anweisungen konfiguriert sind, die, wenn sie ausgeführt werden, die Rechenvorrichtung dazu veranlassen, das computerimplementierte Verfahren nach einem der vorstehenden Ansprüche auszuführen.

13. System, umfassend;
einen Speicher;
eine Client-Vorrichtung nach Anspruch 12; und
eine Server-Vorrichtung.

## Revendications

1. Procédé implémenté par ordinateur (100) destiné à la mise à l'échelle supérieure d'une image au niveau d'un dispositif client, le procédé comprenant :
la réception, en provenance d'un dispositif serveur, d'une image qui est l'une parmi une pluralité d'images formant un flux d'images, dans lequel l'image comprend une pluralité de parties d'image (110) ;
la réception, en provenance du dispositif serveur, de métadonnées se rapportant à un traitement de l'image à effectuer au niveau du dispositif client ;
la détermination d'un premier groupe d'une ou plusieurs parties d'image provenant de la pluralité de parties d'image pour y appliquer un premier processus de mise à l'échelle supérieure d'image parmi une pluralité de processus de mise à l'échelle supérieure d'image disponibles (120), dans lequel la détermination du premier groupe de parties d'image pour y appliquer le premier processus de mise à l'échelle supérieure d'image est en fonction des métadonnées ;
la sélection du premier groupe de parties d'image en fonction de la détermination (130) ;
l'application du premier processus de mise à l'échelle supérieure d'image au premier groupe de parties d'image (140) ;
et
dans lequel les métadonnées comprennent une carte de tuiles (200) comprenant une pluralité de tuiles (210) en fonction de la pluralité de parties d'image, la carte de tuiles indiquant les parties d'image à sélectionner, et dans lequel la carte de tuiles indique un index pour chacune parmi la pluralité de tuiles, dans lequel l'index indique une intensité de mise à l'échelle supérieure à appliquer ou l'une parmi une pluralité de procédures de mise à l'échelle supérieure à appliquer à une tuile en fonction du premier processus de mise à l'échelle supérieure d'image.

2. Procédé implémenté par ordinateur selon la revendication 1, dans lequel le premier processus de mise à l'échelle supérieure d'image comprend un modèle de super-résolution basé sur un réseau neuronal.

3. Procédé implémenté par ordinateur selon l'une quelconque revendication précédente, dans lequel la carte de tuiles indique un index pour chacune parmi la pluralité de tuiles, dans lequel l'index fournit des données contextuelles au client et/ou indique l'une parmi une pluralité de procédures de mise à l'échelle supérieure à appliquer à une tuile en fonction du premier processus de mise à l'échelle supérieure d'image.

4. Procédé implémenté par ordinateur selon l'une quelconque revendication précédente, dans lequel les métadonnées sont envoyées du dispositif serveur pour chaque image de la pluralité d'images qui forment le flux d'images.

5. Procédé implémenté par ordinateur selon l'une quelconque revendication précédente, comprenant en outre la réception, en provenance du dispositif serveur, d'un fichier de manifeste comprenant des informations se rapportant à l'interprétation de métadonnées au niveau du dispositif client, dans lequel le fichier de manifeste comprend un ou plusieurs parmi :
i) un nombre de colonnes dans une grille de tuiles ;
ii) un nombre de rangées dans une grille de tuiles ;
iii) une bibliothèque des index et leurs processus de mise à l'échelle supérieure d'image apparentés ;
iv) une indication indiquant si le dispositif serveur prend en charge une incorporation de la carte de tuiles pour chaque image dans la pluralité d'images formant le flux d'images ;
v) une indication de disponibilité d'un flux de données supplémentaire comprenant des données à pleine résolution ; et/ou
vi) des instructions pour l'assemblage des tuiles dans la grille de tuiles pour générer l'image.

6. Procédé implémenté par ordinateur selon l'une quelconque revendication précédente, dans lequel la détermination du premier groupe de parties d'image comprend l'application d'un modèle de saillance (500) pour détecter des parties d'image contenant une ou plusieurs régions saillantes de l'image, dans lequel une région saillante de l'image comprend une ou plusieurs parties d'image qui ont une valeur de saillance au-dessus d'un seuil prédéterminé.

7. Procédé implémenté par ordinateur selon l'une quelconque des revendications 1 à 5, dans lequel la détermination du premier groupe de parties d'image comprend la détection d'un ou plusieurs bords dans lequel un bord est une limite entre des objets virtuels dans l'image, dans lequel une détection de bord comprend l'extraction d'un canal de luminance (610), l'application d'un filtre laplacien au canal de luminance (620), le calcul d'un score détaillé de luminance pour chaque tuile (630) en déterminant de ce fait une valeur de luminance de la pluralité de parties d'image, et la sélection comprend la sélection d'une ou plusieurs parties d'image ayant une valeur de luminance au-dessus d'un seuil prédéterminé.

8. Procédé implémenté par ordinateur selon l'une quelconque revendication précédente, comprenant en outre la sélection d'un deuxième groupe de la ou des parties d'image ; et
l'application d'un second processus de mise à l'échelle supérieure d'image au deuxième groupe de parties d'image, dans lequel le second processus de mise à l'échelle supérieure d'image est moins exigeant en termes de calcul informatique que le premier processus de mise à l'échelle supérieure d'image.

9. Procédé implémenté par ordinateur selon l'une quelconque revendication précédente, comprenant en outre le stockage d'une ou plusieurs parties d'image de l'image dans un cache et la sélection d'un troisième groupe d'une ou plusieurs parties d'image à récupérer auprès du cache.

10. Procédé selon l'une quelconque revendication précédente dans lequel la résolution de l'image est de 3840 x 2160 pixels ou supérieure.

11. Procédé implémenté par ordinateur selon l'une quelconque revendication précédente, comprenant en outre : la détermination d'un quatrième groupe d'une ou plusieurs parties d'image de l'image à utiliser dans une image ultérieure dans le flux d'images comprenant au moins l'image et l'image ultérieure, le procédé comprenant :
le calcul, pour chaque partie d'image de la pluralité de parties d'image, d'une différence moyenne d'intensité de pixel entre l'image et l'image ultérieure ;
si la différence moyenne d'intensité de pixel d'une ou plusieurs parmi la pluralité de parties d'image est inférieure à un seuil prédéterminé, l'ajout de la ou des parties d'image au quatrième groupe de parties d'image et le stockage d'une localisation du quatrième groupe de parties d'image ; et
l'utilisation du quatrième groupe de parties d'image dans l'image ultérieure.

12. Dispositif informatique client (700) comprenant un ou plusieurs processeurs (702) qui sont associés à une mémoire (704), le ou les processeurs étant configurés avec des instructions exécutables qui, lorsqu'elles sont exécutées, amènent le dispositif informatique à effectuer le procédé implémenté par ordinateur selon l'une quelconque revendication précédente.

13. Système comprenant ;
une mémoire ;
un dispositif client selon la revendication 12 ; et
un dispositif serveur.
